# EUROPEAN PATENT SPECIFICATION

(11) **EP 1 834 394 B1**
(45) Date of publication and mention of the grant of the patent: **09.03.2016**
(21) Application number: 05855027.8
(22) Date of filing: 20.12.2005
(51) Int. Cl.: H02J 7/02

(54) **METHOD AND APPARATUS FOR NEAR FIELD COMMUNICATIONS**
VERFAHREN UND VORRICHTUNG ZUR NAHFELDKOMMUNIKATION
PROCEDE ET DISPOSITIF POUR COMMUNICATIONS EN CHAMP PROCHE

(30) Priority: 30.12.2004 US 640487 P; 08.12.2005 US 299146
(43) Date of publication of application: 19.09.2007
(73) Proprietor: Motorola Mobility LLC, Libertyville, IL 60048 (US)
(72) Inventor: BLACK, Greg R., Vernon Hills, Illinois 60061 (US); KOO, Simone, Palatine, Illinois 60074 (US); PATEL, Deven M., Antioch, IL 60002 (US)
(74) Representative: Openshaw & Co.
(86) International application number: PCT/US2005/046402
(87) International publication number: WO 2006/073834

(56) References cited:
- EP-A- 1 542 332
- WO-A-2004/014214
- US-A1- 2003 006 121
- US-A1- 2004 155 782
- US-B1- 6 184 651

## Description

### FIELD OF THE INVENTION

The present invention relates generally to device identification through radio frequency communications and more particularly through the use of near field communications.

### BACKGROUND OF THE INVENTION

Passive radio frequency identification (RFID) tags are known. Near field communication devices may use RFID tags to exchange information and in particular in personal area networks (PANs) to identify one device to another. Inductive charging of rechargeable batteries is also known. However, when charging multiple devices inductively, such as a plurality of devices, each device may require different voltage and current levels to recharge the battery.

Some devices require high power in the charger, so for safety and efficiency it is necessary that the charging process begin with the detection and identification of the devices to be charged. This detection and identification requires wireless communication between the charger and the battery powered device or stand-alone battery. A fully depleted battery or battery that is removed from the device and placed on the inductive charger will not be able to communicate with the charger to provide the identification.

US 6 184 651 B1 discloses an arrangement in which, in a contactless charging system charging energy is transferred across an inductive coupler to charge a battery of a portable device, such as a two-way radio, cellular phone, paging device, or wireless communicator. The inductive coupler also provides a way for communicating at least one signal, such as to improve the charging process and the transfer of charging energy.

US 2004/155782 A1 discloses acquiring and collecting data from a subject animal. A system includes a passive data acquisition device associable with a subject animal including: a sensor, a radio frequency identification transponder, and a magnet separate from the transponder.

What is needed is a method and apparatus for device identification in inductive charging systems. The various aspects, features and advantages of the disclosure will become more fully apparent to those having ordinary skill in the art upon careful consideration of the following Detailed Description thereof with the accompanying drawings described below.

### BRIEF DESCRIPTION OF THE DRAWINGS

The various aspects, features and advantages of the present invention will become more fully apparent to those having ordinary skill in the art upon careful consideration of the following Detailed Description of the Drawings with the accompanying drawings described below.
FIG. 1 is an exemplary block diagram of a near field device and inductive charger.
FIG. 2 is an exemplary block diagram of a near field device and inductive charger.
FIG. 3 is an exemplary device identification and charging flow diagram.
FIG. 4 is an exemplary device identification and charging flow diagram.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

### DETAILED DESCRIPTION OF THE DRAWINGS

Before describing in detail the particular device identification method and apparatus in accordance with the present invention, it should be understood that the present invention resides primarily in combinations of method steps and apparatus components related thereto. Accordingly, the apparatus components and method steps have been represented where appropriate by conventional symbols in the drawings, showing only those specific details that are pertinent to understanding the present invention so as not to obscure the disclosure with details that will be readily apparent to those of ordinary skill in the art having the benefit of the description herein.

Disclosed herein is a method and apparatus for inductively charging a battery. The battery comprises a housing, at least one cell carried in the housing and a multimode near field transceiver carried also in the housing. In one exemplary embodiment, the transceiver is operable in a passive mode to provide information. The battery further comprises a charging coupler coupled to the battery through a charging circuit and a communication coupler or antenna coupled to the transceiver.

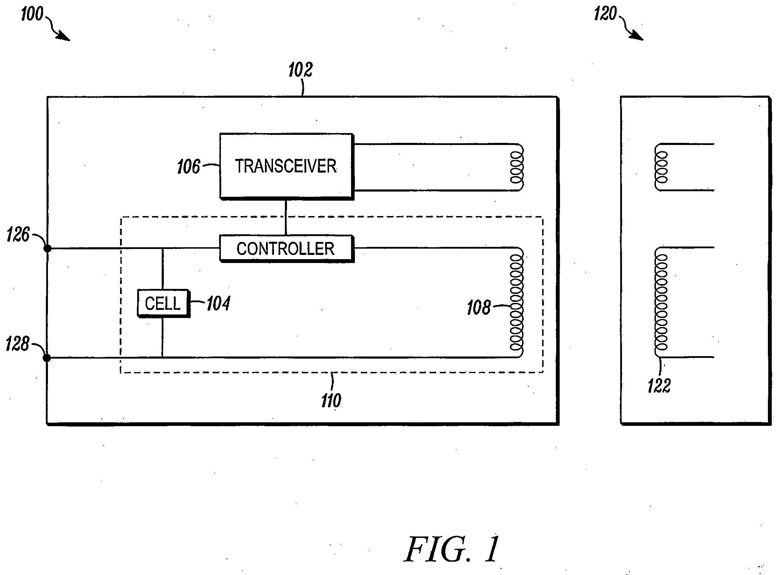

Illustrated in FIG. 1, exemplary battery 100 is shown comprising a housing 102, at least one battery cell 104 carried in the housing and a multi mode near field (NFC) transceiver 106 also carried in the housing 102. The multimode NFC transceiver 106 is operable in a passive mode to provide information and an active mode for transmitting and receiving information such as from other NFC devices. When power is available, either from the battery itself or an alternative source, the transceiver in this embodiment may operate as an active transceiver. When power is not available, the passive transceiver may only provide information that is stored in a memory. For example, when power is not available the transceiver is operable in a passive mode to provide a device ID. The device ID in this embodiment would be transmitted to the charger to indicate the battery type thereto.

Further in this exemplary embodiment, the battery 100 comprises a charging coupler 108 coupled to the cell 104 through a charging circuit 110. A communications coupler 112 is coupled to the transceiver 106. The charging coupler 108 in this embodiment inductively couples the charging circuit 110 of the battery 100 to an inductive charger 120 via a charger charging coupler 122. It is understood that other charging circuits known to those skilled in the art may also be used. For example, in one embodiment, the charging circuit 110 is a schottky diode. When the battery 100 is coupled to a device such as a radiotelephone or the like, data from the device may be sent to the transceiver 106 for transmission or received and passed to the device. The battery cell 104 of the battery 100 may be coupled to the transceiver such that the near field transceiver 106 and the electronic device are powered by the at least one battery cell.

An electronic device coupled to the battery is used for exemplary purposes only and it is to be understood that numerous electronic devices may apply. The radiotelephone described herein is a representation of the type of a wireless communication device that may benefit from the present invention. However, it is to be understood that the present invention may be applied to any type of hand-held or portable electronic device including, but not limited to, the following devices: radiotelephones, cordless phones, paging devices, personal digital assistants, portable computers, pen-based or keyboard-based handheld devices, remote control units, portable media players such as an audio player (such as an MP3 player) and the like. Accordingly, any reference herein to the electronic device should also be considered to apply equally to other hand-held or portable electronic devices.

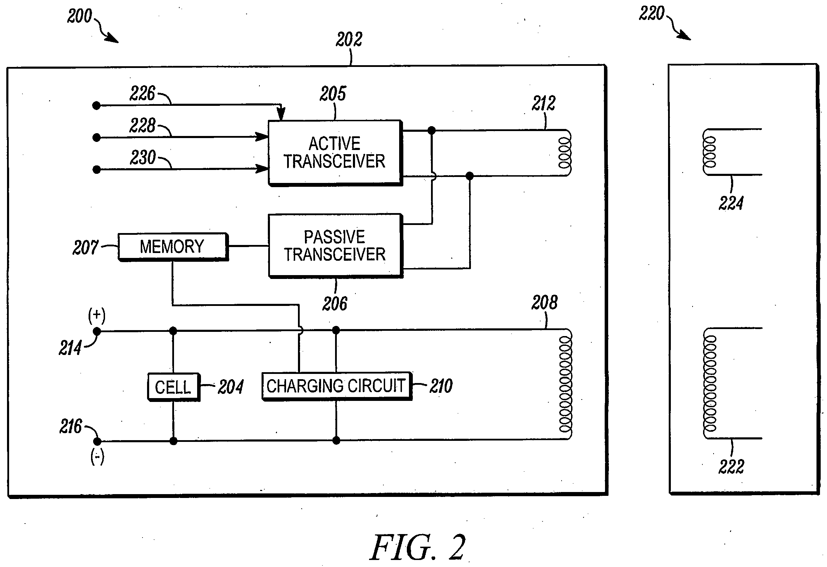

In another embodiment illustrated in FIG. 2, a battery 200 and charger 220 are shown. The battery comprises a housing 202, a cell 204, an active transceiver 205 and a passive transceiver 206. The battery 200 also comprises a memory 207 a charging coupler 208, and a charging circuit 210 which is coupled to the cell 204. A communication coupler 212 is coupled to the active transceiver 205 and the passive transceiver 206. The memory 207 may be carried in the housing 202 or may be a component of the electronic device when the battery 200 is coupled thereto. The battery 200 also comprises a first terminal 214 and a second terminal 216 to electrically couple the device to the cell 204 in the battery 200 to thereby provide power.

In the exemplary embodiment shown in FIG. 2, the communication coupler 212 is shown as a first coil 212 and the charging coupler 208 is shown as a second coil 208. The communication coupler 212 may be an inductor or an antenna. The first coil 212 may be a portion of the second coil 208. The length and number of coils will determine the operational frequency of the coil. The first coil 212 may therefore be formed by tapping into a portion of the second coil at a predetermined number of coils to operate at the desired frequency range. In this embodiment, the battery further comprises an element, the second coil, coupled to the at least one cell and to the transceiver, the element providing an antenna for the transceiver and a charging coupler for the at least one cell.

The inductive charger 220 comprises a charger charging coupler 222 and a charger communication coupler 224. The charger charging coupler 222 inductively couples with the charging coupler 208 of the battery 200. The charger communication coupler 224 couples, or is used to form a wireless link with the communication coupler 212 of the battery 200. When a battery 200 is placed in range of the inductive charger, communications between the battery and the charger may take place and inductive charging can occur. In one exemplary embodiment, the inductive charger 220 has a flat surface upon which the battery may be placed and rest in near field range and remain while charging operations occur.

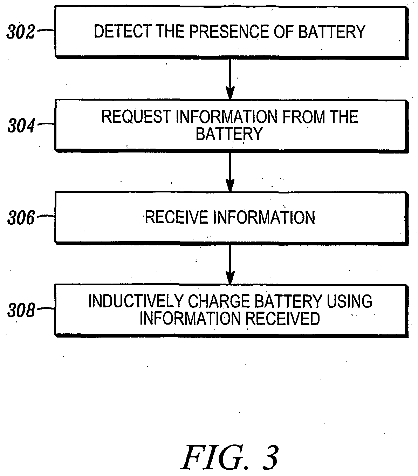

An exemplary method of controlling a battery includes receiving charging power from a near field source by the battery 100 and transmitting from a near field transceiver 106, operating in a passive mode, information indicating cell charging information such as a profile or the like. An exemplary flow diagram, shown in FIG 3, illustrates a device identification and charging procedure. In step 302 the charger 120 detects the presence of a near field communication (NFC) device. In this exemplary embodiment the NFC device is the battery 100, 200. The charger 120 requests, in step 304, information from the device 100. The battery may respond with information, the device ID for example.

If the battery has the capacity to provide power, more information may be transmitted to the charger 120, such as the type of device the battery 100 is coupled to, encryption information, battery characteristics or charging profile or the like. The information may come from the battery memory 207 or memory in the device. The battery may also only send a Device ID, charging profile or the like, particularly when only the passive transceiver can operate because, for example the battery has been depleted and no other power source is available.

The charger receives, in step 306 the information and based thereon, inductively charges, in step 308, the battery 100. To determine how to inductively charge the battery 100, the charger 120, in one exemplary embodiment, may use a lookup table or database to compare the information sent by the battery to that in the charger 120, such as device ID to indicate a valid battery, to determine the charger profile or settings for that particular battery 100. If more information is sent by the battery 100, the charger 120 may use that information to set the charging parameters.

The method further includes permitting the operation of the near field transceiver in a non-passive mode when the at least one cell 104 is at least partially charged or the device has power available from an alterative source. In this exemplary embodiment, the method may further include the step of transmitting data received from a master device in the active mode, data from the master device. The non- passive transceiver reads information from other passive or non-passive receivers within range. The data received may be stored in the memory 207 of the battery or in the device coupled thereto. The battery 100 may also transmit information such as a battery cell charging state. This for example may include, charging, charged, percent charge or charge level or the like. The transceiver may communicate the charging status while the at least one cell is charging.

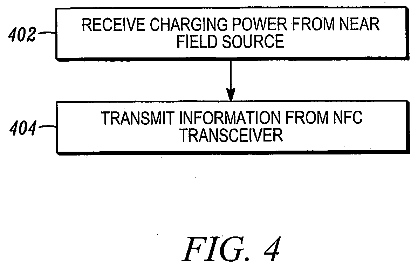

An exemplary illustrated in FIG. 4 shows a flow diagram of the method of controlling a battery which includes receiving 402 charging power from a near field source by the battery 100 and transmitting 404 from a NFC transceiver 106. The battery may transmit the information from the near field transceiver 106 prior to receiving charging power form the near field source. The battery may also transmit information be the NFC transceiver during the receiving of charging power such as charge level and battery characteristics.

The information transmitted may also include information related to the near field signals such as signal strength. The method would comprise the step of monitoring the near field and then enabling the charging of the battery cell when the near field present is suitable for charging the cell.

The multimode transceiver, operational as both a passive transceiver and an active transceiver may operate in a passive or tag mode without power, powered passive or tag mode, powered reader mode, powered peer to peer mode.

When the battery has a sufficient charge, the active transceiver 205 may operate in powered reader mode. This allows the battery to send and receive communications, near filed communications, whether or not the battery is coupled to a device. In this exemplary embodiment, the battery may be removed from the device and placed on the inductive charger and charged without being coupled to the device and the charger can still acquire information pertaining to the battery and how it is to be charger.

When the battery is coupled to a device, information can be sent to and retrieved from the device. When the battery is not coupled to the device, information may be sent to and from the memory carried in the battery 100. The battery includes a first port 226 connected to the transceiver 106 for coupling to the electronic device, the first port 228 is for passing signals to control the transceiver operation in at least a reader mode or a peer-to-peer mode. The battery may also include a second port 228 coupled to the transceiver, the second port 228 for inputting data from an external device. A third port 230 may supply power from the external device.

While the present inventions and what is considered presently to be the best modes thereof have been described in a manner that enables those of ordinary skill in the art to make and use the invention, it will be understood and appreciated that there are many equivalents to the exemplary embodiments disclosed herein and that modifications may be made thereto without departing from the scope of the invention, which is defined by the appended claims.

## Claims

1. A battery comprising:
a housing (202);
at least one battery cell (204) carried in said housing;
a multi-mode near field transceiver carried in said housing (202);
the multi-mode near field transceiver comprising an active transceiver (205) and a passive transceiver (206);
memory (207);
a charging coupler (208);
a charging circuit (210) coupled to the at least one cell (204); and
a communication coupler (212) coupled to the active transceiver (205) and the passive transceiver (206).

2. The battery as defined in claim 1, wherein the transceiver is operable in a passive mode to provide a device ID.

3. The battery as defined in claim 2, further comprising an antenna-coupled to the transceiver.

4. The battery as defined in claim 1, wherein the charging circuit includes a schottky diode.

5. The battery as defined in claim 1, further comprising an element coupled to said at least one cell and to said transceiver, the element providing an antenna for said transceiver and a charging coupler for said at least one cell.

6. The battery as defined in claim 2, wherein the transceiver is further operable in a passive mode to provide a charging profile to a charging base.

7. The battery as defined in claim 6, wherein the transceiver communicates the charging status while said at least one cell is charging.

8. The battery as defined in claim 1, further including a port connected to the transceiver for coupling to an electronic device, the port for passing signals to control the transceiver operation in at least a reader mode or a peer-to-peer mode.

9. The battery as defined in claim 8, wherein the transceiver and said electronic device are powered by said at least one cell.

10. The battery as defined in claim 1, further including a second port coupled to the transceiver, said second port for inputting power from an external device.

11. A method of controlling a battery, comprising:
receiving charging power from a near field source;
transmitting from a near field transceiver operating in a passive mode information indicating cell charging information; and
permitting the operation of the near field transceiver in a active mode when the at least one cell is at least partially charged, and transmitting data received from a master device in an active mode.

12. The method as defined in claim 11, further including permitting the operation of the near field transceiver in a non-passive mode when the at least one cell is at least partially charged.

13. The method as defined in claim 11, wherein the step of transmitting includes transmitting the cell charging state.

14. The method as defined in claim 11, further comprising the step of transmitting a battery identification indicating that it is a valid battery.

15. The method as defined in claim 11, further comprising the step of monitoring the near field.

16. The method as defined in claim 11, further comprising the step of enabling charging of the cell when the near field present is suitable for charging the cell.

## Patentansprüche

1. Batterie, umfassend:
ein Gehäuse (202);
mindestens eine Batteriezelle (204), die in dem Gehäuse aufgenommen ist;
einen Mehrmodusnahfeldtransceiver, der in dem Gehäuse (202) aufgenommen ist;
wobei der Mehrmodusnahfeldtransceiver einen aktiven Transceiver (205) und einen passiven Transceiver (206) umfasst;
Speicher (207);
einen Ladekoppler (208);
eine Ladeschaltung (210), die mit der mindestens einen Zelle (204) gekoppelt ist; und
einen Kommunikationskoppler (212), der mit dem aktiven Transceiver (205) und dem passiven Transceiver (206) gekoppelt ist.

2. Batterie nach Anspruch 1, wobei der Transceiver in einem passiven Modus betriebsfähig ist, eine Geräte-ID bereitzustellen.

3. Batterie nach Anspruch 2, weiter umfassend eine Antenne, die mit dem Transceiver gekoppelt ist.

4. Batterie nach Anspruch 1, wobei die Ladeschaltung eine Schottky-Diode umfasst.

5. Batterie nach Anspruch 1, weiter umfassend ein Element, das mit der mindestens einen Zelle und dem Transceiver gekoppelt ist, wobei das Element eine Antenne für den Transceiver und einen Ladekoppler für die mindestens eine Zelle bereitstellt.

6. Batterie nach Anspruch 2, wobei der Transceiver weiter in einem passiven Modus betriebsfähig ist, ein Ladeprofil an eine Ladestation bereitzustellen:

7. Batterie nach Anspruch 6, wobei der Transceiver den Ladezustand kommuniziert, während die mindestens eine Zelle lädt.

8. Batterie nach Anspruch 1, weiter umfassend einen Anschluss, der mit dem Transceiver verbunden ist, um mit einem elektronischen Gerät zu koppeln, wobei der Anschluss zum Weitergeben von Signalen dient, um den Transceiverbetrieb in mindestens einem Leser-Modus oder einem Peer-To-Peer-Modus zu steuern.

9. Batterie nach Anspruch 8, wobei der Transceiver und das elektronische Gerät durch die mindestens eine Zelle betrieben werden.

10. Batterie nach Anspruch 1, weiter umfassend einen zweiten Anschluss, der mit dem Transceiver gekoppelt ist, wobei der zweite Anschluss zum Zuführen von Leistung von einem externen Gerät dient.

11. Verfahren zum Steuern einer Batterie, umfassend:
Aufnehmen von Ladeleistung von einer Nahfeldquelle;
Senden von Informationen, die Zellenladeinformationen anzeigen, von einem Nahfeldtransceiver, der in einem passiven Modus arbeitet; und
Erlauben des Betriebs des Nahfeldtransceivers in einem aktiven Modus, wenn die mindestens eine Zelle mindestens teilweise geladen ist, und Senden von Daten, die von einem Mastergerät empfangen wurden, in einem aktiven Modus.

12. Verfahren nach Anspruch 11, weiter umfassend das Erlauben des Betriebs des Nahfeldtransceivers in einem nicht passiven Modus, wenn die mindestens eine Zelle mindestens teilweise geladen ist.

13. Verfahren nach Anspruch 11, wobei der Schritt des Sendens das Senden des Zellenladezustands umfasst.

14. Verfahren nach Anspruch 11, weiter umfassend der Schritt des Sendens einer Batterieidentifikation, die anzeigt, dass es eine gültige Batterie ist.

15. Verfahren nach Anspruch 11, weiter umfassend der Schritt des Überwachens des Nahfeldes.

16. Verfahren nach Anspruch 11, weiter umfassend der Schritt des Aktivierens des Ladens der Zelle, wenn das vorhandene Nahfeld geeignet ist, um die Zelle zu laden.

## Revendications

1. Batterie comprenant :
un boîtier (202) ;
au moins une cellule de batterie (204) logée dans ledit boîtier ;
un émetteur-récepteur de champ proche multimodal logé dans ledit boîtier (202) ;
l'émetteur-récepteur multimodal de champ proche comprenant un émetteur-récepteur actif (205) et un émetteur-récepteur passif (206) ;
une mémoire (207);
un coupleur de charge (208) ;
un circuit de charge (210) couplé à l'au moins une cellule (204) ; et
un coupleur de communication (212) couplé à l'émetteur-récepteur actif (205) et à l'émetteur-récepteur passif (206).

2. Batterie telle que définie dans la revendication 1, dans laquelle l'émetteur-récepteur peut fonctionner dans un mode passif pour fournir une identification du dispositif.

3. Batterie telle que définie dans la revendication 2, comprenant en outre une antenne couplée à l'émetteur-récepteur.

4. Batterie telle que définie dans la revendication 1, dans laquelle le circuit de charge comprend une diode Schottky.

5. Batterie telle que définie dans la revendication 1, comprenant en outre un élément couplé à ladite au moins une cellule et audit émetteur-récepteur, l'élément fournissant une antenne pour ledit émetteur-récepteur et un coupleur de charge pour ladite au moins une cellule.

6. Batterie telle que définie dans la revendication 2, dans laquelle l'émetteur-récepteur peut en outre fonctionner dans un mode passif pour fournir un profil de charge à une base de charge.

7. Batterie telle que définie dans la revendication 6, dans laquelle l'émetteur-récepteur transmet l'état du charge lorsque ladite au moins une cellule est en train de se charger.

8. Batterie telle que définie dans la revendication 1, comprenant en outre un port connecté à l'émetteur-récepteur pour le couplage à un dispositif électronique, le port pour faire passer des signaux pour contrôler le fonctionnement de l'émetteur-récepteur dans au moins un mode lecture ou dans un mode pair à pair.

9. Batterie telle que définie dans la revendication 8, dans laquelle l'émetteur-récepteur et ledit dispositif électronique sont alimentés par ladite au moins une cellule.

10. Batterie telle que définie dans la revendication 1, comprenant en outre un deuxième port couplé à l'émetteur-récepteur, ledit deuxième port étant destiné à l'apport de la puissance à partir d'un dispositif externe.

11. Procédé de contrôle d'une batterie, comprenant :
la réception d'une puissance de charge depuis une source de champ proche ;
la transmission, depuis un émetteur-récepteur de champ proche fonctionnant en un mode passif, de l'information indiquant l'information de charge de la cellule ; et
la permission de fonctionnement de l'émetteur-récepteur de champ proche dans un mode actif lorsque l'au moins une cellule est au moins partiellement chargée, et d'une transmission des données reçues d'un dispositif maître dans un mode actif.

12. Procédé tel que défini dans la revendication 11, comprenant en outre la permission de fonctionnement du récepteur-transmetteur de champ proche dans un mode non passif lorsque l'au moins une cellule est au moins partiellement chargée.

13. Procédé tel que défini dans la revendication 11, dans lequel l'étape de transmission comprend la transmission de l'état de charge de la cellule.

14. Procédé tel que défini dans la revendication 11, comprenant en outre l'étape de transmission d'une identification de batterie indiquant qu'il s'agit d'une batterie valable.

15. Procédé tel que défini dans la revendication 11, comprenant en outre l'étape de surveillance du champ proche.

16. Procédé tel que défini dans la revendication 11, comprenant en outre l'étape d'activation du chargement de la cellule lorsque le champ proche présent est approprié pour le chargement de la cellule.
